Europäisches Patentamt

European Patent Office

Office européen des brevets

(19)

(11) Publication number: **0 117 084**
**B1**

(12) **EUROPEAN PATENT SPECIFICATION**

(45) Date of publication of patent specification: **14.01.87**

(21) Application number: **84300581.0**

(22) Date of filing: **30.01.84**

(51) Int. Cl.⁴: **B 01 D 46/26,** B 01 D 53/34,
F 04 D 29/70

(54) **Gas treatment.**

(30) Priority: **14.02.83 GB 8304067**

(43) Date of publication of application:
**29.08.84 Bulletin 84/35**

(45) Publication of the grant of the patent:
**14.01.87 Bulletin 87/03**

(84) Designated Contracting States:
**AT BE CH DE FR GB IT LI NL SE**

(56) References cited:
**CH-A- 261 970**
**DE-A-2 525 865**
**DE-C- 597 809**
**FR-A-1 522 329**

(73) Proprietor: **IMPERIAL CHEMICAL INDUSTRIES
PLC**
**Imperial Chemical House Millbank**
**London SW1P 3JF (GB)**

(72) Inventor: **Ramshaw, Colin**
**4 The Spinney**
**Norley Cheshire (GB)**

(74) Representative: **Thomas, Ieuan et al**
**Imperial Chemical Industries PLC Legal**
**Department: Patents PO Box 6**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with the treatment of gases with liquids and includes an improved apparatus for that purpose.

In numerous technical fields, a need arises to expose a gas to continuous contact with a liquid. For example, it may be desired to dissolve a gaseous or liquid component out of a gas or to remove a particulate impurity therefrom. For such varied tasks, a wide range of equipment has been proposed and developed. Some such items of equipment have been static, for example trickle towers; others have been moving equipment, for example rotary sprays.

Within the last few years, environmental demands have made it even more necessary to subject gases to washing and other liquid treatments — and on an ever larger scale. However, those same environmental considerations make it increasingly undesirable that large structures be erected to carry out such treatments. In addition, in current highly competitive commercial operations, the large costs entailed in the adoption of such large-scale equipment make it increasingly difficult to justify their adoption.

Against this background, we have devised the present invention, which makes possible the installation of more compact, and in turn less expensive, equipment for subjecting gases to continuous liquid treatment.

Whilst CH—A—261,970 and DE—C—597,809 disclose devices comprising (a) centrifugal impellers, (b) a cylindrical layer of permeable material disposed across the flow of gas through the device and (c) means to feed liquid to the said layer. DE—C—597809 also discloses that the permeable material rotates at a speed slower than that of the impeller. The material does not therefore rotate with the blades of the impeller and hence mass transfer therein is not as efficient as in the rotary permeable elements used in the present invention. Additionally, we have now discovered that already-existing impeller installations may be readily adapted to form apparatus according to the present invention. There is no mention or suggestion in the prior art that already-existing devices may be adapted to form the devices disclosed therein.

The present invention provides an apparatus for continuously contacting a gas with a liquid, which apparatus comprises a centrifugal impeller, a generally cylindrical layer (6) of permeable material disposed across the radial path of the gas and means (7) for feeding liquid to the radially inner face of the said layer characterised in that the permeable material (a) has a specific surface area of at least 1000 metres$^2$/metres$^3$ and (b) is supported on the blades (5) of the impeller and is rotatable therewith.

A centrifugal impeller for gases draws gas axially into its interior and transports it in a generally radially outward direction, eventually discharging the gas at its outer surface. The impeller takes the form of a broadly annular arrangement of blades, which are disposed radially or at an angle to the circumference of the annulus, and is mounted for rotation in a suitable casing which is provided with a suitable exit port for the treated gas. In the apparatus of the present invention a layer of high surface area permeable material is disposed across the radial path of the gas.

The layer of permeable material may be disposed in a cylindrical arrangement across the radially inner face of the annulus of impeller blades, in which location it is afforded better support by the blades, or across the radially outer face of the annulus. In another arrangement, the permeable material may be located between the blades, in discrete arcuate or flate segments combining to form a generally cylindrical layer. It is a particular advantage of the present invention that the improved gas treatment apparatus may conveniently be formed by adding the layer of permeable material and the liquid feed means to an already-existing impeller installation.

The permeable material of which the generally cylindrical layer is formed may be any such material of high surface area, by which is meant that it has a specific surface area of at least 1,000 $m^2/m^3$. Preferably the specific surface area is at least 1,500 $m^2/m^3$, especially from 2,000 to 5,000 $m^2/m^3$. However, it is also desirable that its permeability is such as not to give rise to high pressure drops across the thickness of the layer. Suitable materials which satisfy the demands of surface area and permeability include knitted and woven fabrics, non-woven mats, foams and meshes. The materials may be metallic or of plastics or natural materials. Specific suitable materials include "Retimet" skeletal foam, "Knitmesh" knitted metal fabric, expanded fine metal mesh and meshes of temperature-resistant plastics such as "Promel" and "Atomel".

The liquid feed means supplies liquid to the radially inner face of the layer of permeable material. The means may be in the form of a single feed pipe or a single spray head but in a preferred form it is a plurality of perforated feed pipes, projecting into the interior of the impeller in a direction parallel to the axis of rotation thereof and each transmitting a plurality of jets or sprays of liquid towards the inner face of the layer of permeable material.

Means for discharging the liquid from apparatus according to the present invention is provided therein, conveniently this takes the form of a liquid discharge port in or adjacent the bottom of the casing.

Preferably means are provided to prevent at least a major proportion of the liquid being discharged from the apparatus with the gas through the gas exit port. Conveniently the inner surface of the casing is modified, for example by the addition thereto of a layer of fibrous material, such that tangential movement of the liquid thereover is reduced and the liquid drains to the bottom of the housing for discharge through liquid discharge means. Additionally the angle at which the gas exit port is mounted on the casing may be arranged to further reduce unwanted discharge of liquid therethrough.

One specific application of the apparatus according to the present invention is for the removal of sulphur dioxide from the gases discharged from plant, e.g. power stations, in which coal or heavy fuel oil or any other sulphur-containing fuel is burned. Such gases typically arise at elevated temperatures of perhaps 150°C to 200°C and typically contain perhaps 2% to 3% of sulphur dioxide by weight. Often such gases are discharged via a stack to atmosphere but environmental considerations increasingly militate against such discharge. However, treatment to remove sulphur dioxide from such gases may require the installation of voluminous and expensive equipment. Where such gases arise, the movement of gas to the stack and thence to the atmosphere is normally assisted by the use of an impeller, especially a centrifugal impeller, and such an installation, as indicated above, readily lends itself to adaption to apparatus according to the present invention.

When the apparatus is used for sulphur dioxide removal, the liquid fed to the layer of permeable material may be any such alkaline liquid as is conventionally used for sulphur dioxide absorption, e.g. a calcium-containing alkaline material such as a slurry of lime or of limestone or an aqueous solution such as of caustic soda or sodium carbonate.

If the gaseous feed to the apparatus according to the present invention contains a particulate solid, for example particles of the order of say 0.1 to 10 micrometres in size, the relative rates of liquid and gas flow may if desired be so selected as to ensure that some or all of the particles are removed by means of the liquid contacting. For example, in the case where the gas fed to the apparatus is a sulphur dioxide-containing stream which has already been subjected to grit removal, e.g. by electrostatic precipitation, residual solid material may be removed simultaneously with the removal of sulphur dioxide.

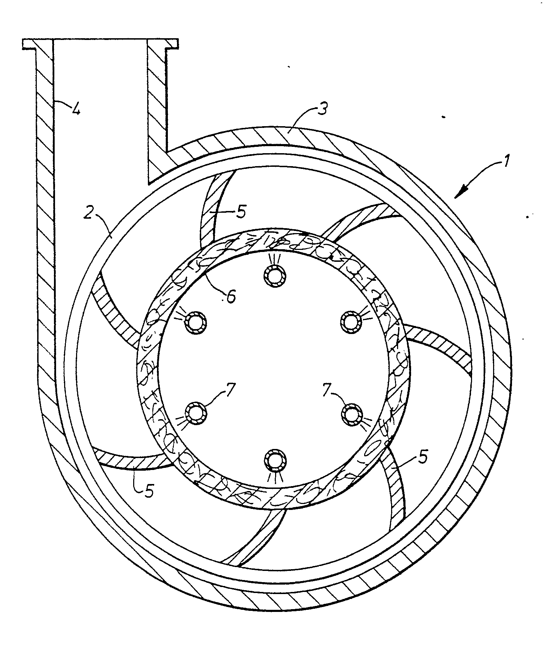

The invention is further described by reference to the accompanying drawing, which is a vertical sectional view of apparatus according to the present invention.

In the drawing, apparatus according to the present invention, designated generally by the numeral 1, comprises an impeller in the form of a rotor 2 mounted for rotation within a casing 3 having a gas exit 4. The rotor 2 carries a plurality of blades 5 by means of which gas is drawn through the apparatus. Mounted against the radially inner ends of the blades 5 is a generally cylindrical layer 6 of a permeable material, which in the illustrated embodiment is "Retimet" 30, a metallic skeletal foam sold by Messrs Dunlop PLC and having a specific surface area of approximately 1,700 $m^2/m^3$. Disposed symmetrically around the inner face of the layer 6 and parallel to the axis of the rotor 2 is a plurality of liquid feed pipes 7 by means of which liquid is sprayed onto the layer 6.

In operation, gas is drawn into the impeller 1 in an axial direction (that is, perpendicular to the plane of the paper) and subsequently passes radially outwardly through the layer 6 of "Retimet" 30 skeletal foam co-currently with the liquid introduced by the feed pipes 7, thereafter leaving the apparatus via gas exit 4. Liquid expelled from the rotor impinges on the inner surface of the casing 3 and is discharged therefrom through an exit port, not shown, in the bottom of the casing.

The invention is further illustrated by reference to the following examples.

### Example 1

A stream of air containing approximately 15 parts per million of sulphur dioxide was passed through the impeller illustrated in the drawing co-currently with a slightly alkaline (pH 8.5) flow of water. The air emerging from the impeller contained only about 0.3 parts per million of sulphur dioxide.

### Example 2

Ammonium chloride fume, obtained by heating crystals of ammonium chloride on a hot plate, and in which all the particles were less than 1.2 micrometres, was fed to apparatus according to the present invention in which the impeller, provided with a mat of "Retimet" 45 on the radially inner surface thereof, was spinning at 3500 rpm, and was irrigated with water. Approximately 90% by weight of the particles were removed from the fume.

### Claims

1. Apparatus for continuously contacting a gas with a liquid which apparatus comprises a centrifugal impeller, a generally cylindrical layer (6) of permeable material disposed across the radial path of the gas and means (7) for feeding liquid to the radially inner face of the said layer characterised in that the permeable material (a) has a specific surface area of at least 1000 metres$^2$/ metres$^3$ and (b) is supported on the blades (5) of the impeller and is rotatable therewith.

2. Apparatus as claimed in claim 1 in which the impeller is in the form of a broadly annular arrangement of blades, which are disposed radially or at an angle to the circumference of the annulus.

3. Apparatus as claimed in claim 2 in which the layer of permeable material is disposed in a cylindrical arrangement across the radially inner face of the annulus of impeller blades.

4. Apparatus as claimed in claim 1 in which the permeable material has a specific surface area of at least 1500 metres$^2$/ metres$^3$.

5. Apparatus as claimed in claim 1 in which the permeable material comprises a knitted or woven fabric, a non-woven mat, a foam or a mesh.

6. Apparatus as claimed in claim 1 in which the liquid feed means comprises a plurality of perforated feed pipes, projecting into the interior of the impeller in a direction parallel to the axis of rotation of the impeller and each transmitting a plurality of jets or sprays of liquid towards the inner face of the layer of permeable material.

7. Formation of apparatus as claimed in claim 1 by the addition of a layer of permeable material and liquid feed means to an already-existing impeller installation.

8. Use of apparatus as claimed in claim 1 for the removal of sulphur dioxide from the gases discharged from plant.

9. Use of apparatus as claimed in claim 1 for the removal of particulate solid from a gaseous feed.

## Revendications

1. Appareil pour mettre en contact en continu un gaz avec un liquide, lequel appareil comprend un organe d'impulsion centrifuge, une couche globalement cylindrique (6) de matière perméable disposée à travers le trajet radial du gas et des moyens (7) destinés à alimenter en liquide la face radialement intérieure de ladite couche, caractérisé en ce que la matière permable (a) présente une surface spécifique d'au moins 1000 m²/m³ et (b) est supportée par les pales (5) de l'organe d'impulsion et peut tourner avec elles.

2. Appareil selon la revendication 1, dans lequel l'organe d'impulsion se présente sous la forme d'un agencement globalement annulaire de pales, qui sont disposées radialement ou en formant un certain angle avec la circonférence de l'anneau.

3. Appareil selon la revendication 2, dans lequel la couche de matière perméable est disposée en un agencement cylindrique sur la face radialement intérieure de l'anneau formé par les pales de l'organe d'impulsion.

4. Appareil selon la revendication 1, dans lequel la matière perméable présente une surface spécifique d'au moins 1500 m²/m³.

5. Appareil selon la revendication 1, dans lequel la matière perméable comprend une étoffe tricotée ou tissée, un mat non tisse une mousse ou un tamis.

6. Appareil selon la revendication 1, dans lequel les moyens d'alimentation en liqufie comprennent plusieurs tuyaux perforés d'alimentation, daisant saillie à l'intérieur de l'organe d'impulsion dans une direction parallèle à l'axe de rotation de l'organe d'impulsion, et émettant chacun plusieurs jets ou pulvérisations de liquide vers la face intérieure de la couche de matière perméable.

7. Formation de l'appareil selon la revendication 1 par l'addition d'une couche de matière perméable et de moyens d'alimentation en liquide à une installation à organe d'impulsion, déjà existante.

8. Utilisation de l'appareil selon la revendication 1, pour l'éleimination de l'anhydride sulfureux des gaz déchargés d'une installation.

9. Utilisation de l'appareil selon la revendication 1 pour l'élimination de particules solides d'une charge gazeuse.

## Patentansprüche

1. Vorrichtung zum kontinuierlichen Inberührungbringen eines Gases mit einer Flüssigkeit, wobei diese Vorrichtung einen Turbinenmischer, eine im allgemeinen zylindrische Schicht (6) aus durchlässigem Material, die quer zu dem radialen Weg des Gases angeordnet ist, und eine Einrichtung (7) für die Zuführung von Flüssigkeit zu der radial inneren Oberfläche der erwähnten Schicht enthält, dadurch gekennzeichnet, daß das durchlässige Material (a) eine spezifische Oberfläche von mindestens 1000 Meter²/Meter³ hat und (b) auf den Schaufeln (5) des Schaufelrades aufliegt und damit drehbar ist.

2. Vorrichtung nach Anspruch 1, bei der das Schaufelrad die Form einer im wesentlichen ringförmigen Anordnung von Schaufeln hat, die radial oder in einem Winkel zu dem Umfang des Ringes angeordnet sind.

3. Vorrichtung nach Anspruch 2, bei der die Schicht aus durchlässigem Material in einer zylindrischen Anordnung quer über der radial inneren Oberfläche des Ringes aus Schaufelradschaufeln angeordnet ist.

4. Vorrichtung nach Anspruch 1, bei der das durchlässige Material eine spezifische Oberfläche von mindestens 1500 Meter²/Meter³ hat.

5. Vorrichtung nach Anspruch 1, bei der das durchlässige Material aus einem gestrickten bzw. gewirkten oder gewebten Stoff, einem Vlies, einem Schaum oder einem Geflecht besteht.

6. Vorrichtung nach Anspruch 1, bei der die Flüssigkeitszuführungseinrichtung eine Vielzahl von gelochten Zuführungsrohren enthält, die in einer zu der Drehachse des Schaufelrades parallelen Richtung in dem Innenraum des Schaufelrades hineinragen und jeweils eine Vielzahl von Flüssigkeitsstrahlen oder Flüssigkeits-Sprühnebeln zu der inneren Oberfläche der Schicht aus durchlässigem Material hin befördern.

7. Bildung einer Vorrichtung nach Anspruch 1 durch Hinzufügen einer Schicht aus durchlässigem Material und einer Flüssigkeitszuführungseinrichtung zu einer bereits vorhandenen Schaufelradeinrichtung.

8. Verwendung der Vorrichtung nach Anspruch 1 zur Entfernung von Schwefeldioxid aus den Gasen, die aus einer Fabrik abgelassen werden.

9. Verwendung der Vorrichtung nach Anspruch 1 zur Entfernung von teilchenförmigem Feststoff aus einem gasförmigen Beschickungsmaterial.